(19) **Europäisches Patentamt / European Patent Office / Office européen des brevets**

(11) **EP 1 513 315 B1**

(12) **EUROPEAN PATENT SPECIFICATION**

(45) Date of publication and mention
of the grant of the patent:
**27.02.2019 Bulletin 2019/09**

(51) Int Cl.:
**H04L 29/06** *(2006.01)*

(21) Application number: **04020611.2**

(22) Date of filing: **31.08.2004**

(54) **Real-time communication through firewalls**

Echtzeitkommunikation durch Firewalls

Communication en temps réel à travers des pare-feux

(84) Designated Contracting States:
**AT BE BG CH CY CZ DE DK EE ES FI FR GB GR
HU IE IT LI LU MC NL PL PT RO SE SI SK TR**

(30) Priority: **05.09.2003 NO 20033938**

(43) Date of publication of application:
**09.03.2005 Bulletin 2005/10**

(73) Proprietor: **LIFESIZE, INC.
Austin, TX 78746 (US)**

(72) Inventors:
- **Kliland, Kevin
  N-0651 Oslo (NO)**
- **Farner, Knut
  N-3400 Lier (NO)**

(74) Representative: **Oslo Patentkontor AS
P.O. Box 7007M
0306 Oslo (NO)**

(56) References cited:
**EP-A- 1 081 918      WO-A-02/11389
US-A1- 2003 091 000**

- **SALVET Z: "Enhanced UDP Packet Reflector for
  Unfriendly Environments" CESNET TECHNICAL
  REPORT, [Online] 11 December 2001
  (2001-12-11), XP002305562 Retrieved from the
  Internet:
  URL:http://www.cesnet.cz/doc/techzp.PDF>
  [retrieved on 2004-11-11]**

**Description**

**Field of the invention**

The present invention is related to real-time data transmission through data communication networks. In particular the present invention discloses an arrangement and a method for high reliability two ways communication in real-time through one or more firewalls advantageously by way of using HTTP/HTTPS protocols and the use of such an arrangement and method.

**Background of the invention**

To protect a PC or network against unauthorized intrusion (hackers), firewalls are used to control all communication. More and more companies and private users install firewalls in order to protect their network. Firewalls do not know all communication protocols on the Internet, so it is necessary with a proxy to let certain protocols through the firewalls. This is in particular the case when the networks are NATed (Network Address Translation, i.e. private addresses are used on the LAN segment). The firewalls today do not handle real-time data wells. With the increased usage of such as IP telephony and real-time online games there is a demand for applications that let such traffic through firewalls in a secure way.

There are many different proposals for solutions within this area, however, currently no good solutions exist and no one seems to be on the way: The big vendors are looking into firewall control protocols that let the applications open and close ports or gates on the firewall. Such solutions have two serious drawbacks. One is that certificates have to be distributed to all applications that are allowed to perform such operations; another drawback is that the security is strongly degraded according to the number of applications that are allowed to perform such operations.

Some of these solutions are mentioned in the following.

1. Open up for all ports over 1024 to all computers behind the FW. This will work if NAT isn't enabled though to a high price due to that hackers from the outside can easily attack all computers behind the FW on all ports over 1024.

2. Use real-time proxies located in the FW's DMZ. The drawback is that operators or corporate personnel etc. have to buy install and configure software for every real-time application someone behind the FW would like to use.

3. Make use of firewall control protocols. Several groups work on standardizing protocols that allow client applications to open and close ports on the FW among others:

   a) The MIDCOM group (Middlebox Communication) is an IETF group standardizing such protocols. Their goal is to evaluate different proposals and use the best one as the official standard.

   b) An FCP (Firewall Control Protocol) is developed by Netscreen and Dynamicsoft.

   c) Another FCP protocol is being developed by Netscreen, Dynamicsoft, Microsoft and Checkpoint. This protocol might be the one adopted by MIDCOM. However, standardizing is extremely slow. The background is probably three-parted:

      (i) All such solutions require key and certificate distribution to everybody opening and closing FW ports. This is a huge problem and the reason why Internet payments solutions aren't widely deployed.

      (ii) A security hole is opened.

      (iii) Many of the big firewall vendors don't want to introduce such solutions, partly because of the two reasons mentioned above. Another reason is probably that their business case in this case is threatened. The FW logic is then partly moved from the FW to the FW clients making the FW thinner.

   d) Microsoft has initiated a protocol called UPnP (Universal Plug and Play), which is supported by many PC periphery vendors. This protocol has the same drawbacks as mentioned above. Though, if used in combination with proprietary signalling and only allowing clients on the inside to open up ports, it might get some marked penetration. Corporations and ISPs will, however, never use it due to reduced security.

   e) SOCKS is a protocol that has existed for a long time and can be used for FW traversal. The problems with this protocol as well as the previous one, UPnP, are as described in connection with the FCP protocol developed by Netscreen, Dynamicsoft, Microsoft and Checkpoint.

f) STUN requires that the FWs must open for UDP traffic from the inside to the outside as well as that responses on the same message must be opened for from the outside to the inside. None of these are common practice to open for in the FW.

4) Separate real-time and data networks. The drawback is that it is expensive to set up and maintain two separate networks instead of one.

Arrangements showing a sender receiver arrangement for two -ways communication in real time through one or more firewalls wherein the arrangements includes at least a real tunnel client behind a firewall and a NAT is known from the following US publications: US 6,687,245 B2 (Fangman et al.), US 2003/0093563 A1 (Young et al.) and US 2002/0150083 A1 (Fangman et al.), however all these publications make use of firewall control protocols for opening and closing ports. Hence the problem regarding opening and closing of ports or the use of dedicated hardware.

Further it is known from EP 10811918 A2, how to communicate with computers inside a secure network through the network firewalls. The invention described here does not communicate in true real time since the server can only respond to a request sent by the client, and not initiate communication. Further the invention breaks the connection after a given time T and then establishes a new connection. This means that the communication is broken for a period of time and can not be characterised as true real time which is required for audio/video communication.

SALVET Z: "Enhanced UDP Packet Reflector for Unfriendly Environments" CESNET TECHNICAL REPORT, December 2001, and WO 02/11389 A2 describes both a tunnelling invention but not a true real-time way to communicate thru a firewall.

US 2003/091000 A1 describes an invention where the video packets are discarded if they don't have a full frame if the buffer goes over a certain level. It is not described here how to establish multiple connections so that the dataflow doesn't stop up.

From the foregoing it should be evident that there is a need for a reliable and secure solution facilitating real time bidirectional communication without the need for opening of ports in firewalls or dedicated hardware.

## Summary of the invention

It is an object of the present invention to provide an arrangement that eliminates the drawbacks described above. The features defined in the independent claims enclosed characterise this arrangement.

In particular, the present invention discloses a system for providing high reliability bidirectional data communication in real time through one or more firewalls and/or NAT devices, said system comprising:

a client computer behind one firewall and/or NAT device, said client computer comprising a tunnel client and at least one real time application running on said client, wherein said client computer is configured to communicate with a tunnel server on the outside of said firewall and/or NAT device,
wherein said tunnel client is configured to establish at least one bidirectional connection to the tunnel server, wherein said at least one bidirectional connection comprises at least one bidirectional HTTPS connection or at least two unidirectional HTTP connections,
the tunnel client being configured to support an HTTP/HTTPS proxy,
wherein the tunnel client is configured to encapsulate RTP packets in TCP packets that are transmitted via the at least one bidirectional connection,
and in that the tunnel client has a two level cache wherein the tunnel client is configured to discard data packets and to set up multiple TCP connections to the tunnel server based on the fill level of the cache system.

Further it is disclosed a method for high reliability bidirectional data communication in real time through one or more firewalls and/or NAT devices where said method comprises the use of at least a tunnel client behind the firewall configured to communicate with a tunnel server on the outside of said firewall,
wherein the tunnel client establishes at least one bidirectional connection to the tunnel server, wherein said at least one bidirectional connection comprises at least one bidirectional HTTPS connection or at least two unidirectional HTTP connections,
wherein the tunnel client establishes new HTTP/HTTPS connection(s) to the tunnel server before a time-out on the previous HTTP/HTTPS connection(s), the tunnel client and tunnel server encapsulating RTP packets in TCP packets that are transported via the at least one bidirectional connection, the tunnel client supporting the use of an HTTP/HTTPS proxy, wherein the tunnel client comprises a two level cache system and in that the tunnel client discards data packets and sets up multiple TCP connections to the tunnel server based on the fill level of the cache system.

## Brief description of the drawings

In order to make the invention more readily understandable, the discussion that follows will refer to the accompanying drawings.

Figure 1 is an overview of the elements involved in a preferred embodiment of the present invention.

Figure 2 is a Block diagram for the present invention.

Figure 3 illustrates possible media and signalling routes for the present invention.

Figure 4: Illustrates a detailed depiction of the protocols used.

Figure 5: shows the protocol architecture.

Figure 6 illustrates how RealTunnel tunnels RTP in TCP

Figure 7 is an arrangement for the HTTP/TCP connection transmitting data from the client to the Media Engine.

Figure 8 is an arrangement for the HTTP/TCP connection transmitting data from the Media Engine to the client.

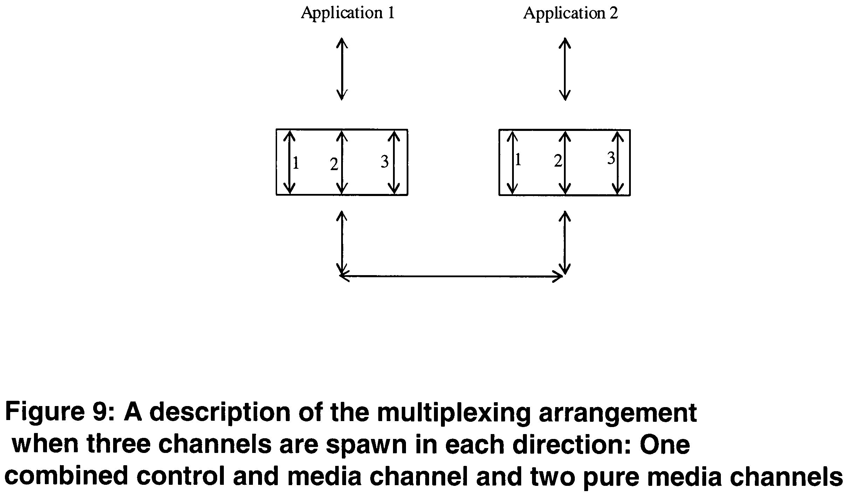

Figure 9: A description of the multiplexing arrangement when three channels are spawn in each direction: One combined control and media channel and two pure media channels

Figure 10: Modified ack behaviour on TCP server side

Figure 11: Pseudo Messenger signalling at registration time

Figure 12: Call setup, two users on system

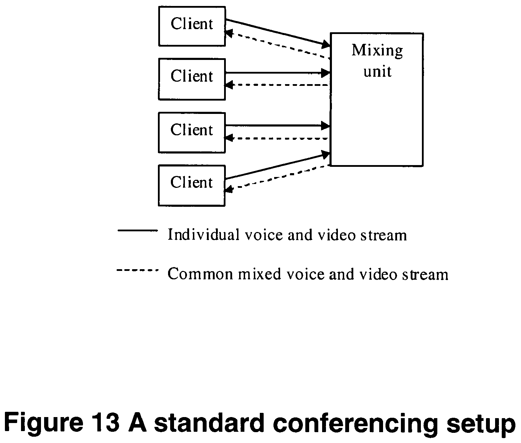

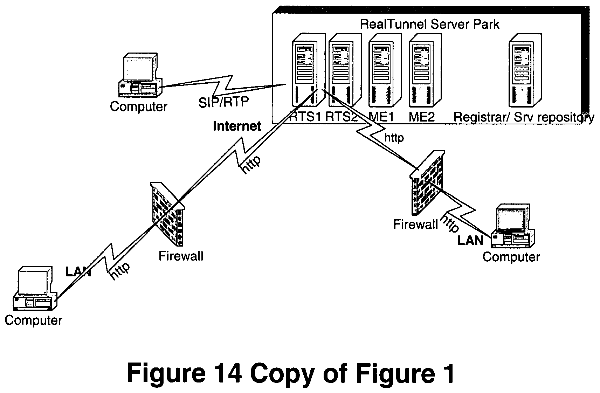

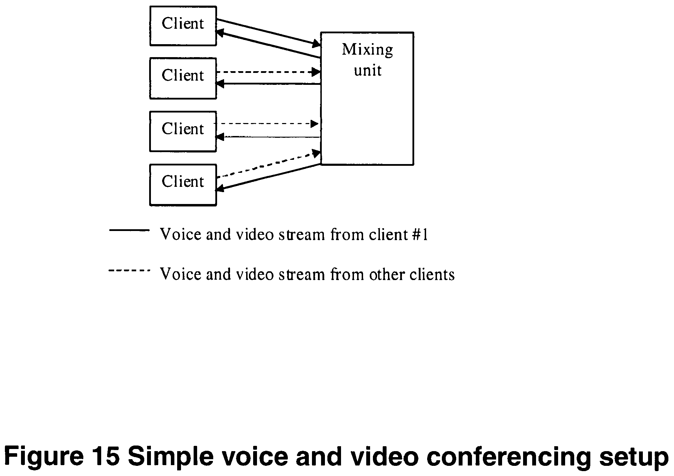

Figure 13 Copy of is an overview of the elements involved in a preferred embodiment of the present invention.

## Detailed description of the present invention

In the following, the assumptions of the present invention will be described, followed by the specific aspects of the invention further, for readability, in the following the wording HTTP is to be understood as HTTP or HTTPS. Still further whenever the wording HTTP or HTTPS appears it is to be understood that HTTP/HTTPS protocols are encapsulated in TCP protocols hence TCP HTTP/HTTPS "packets" are by definition TCP packets.
The RealTunnel client can be deployed in many ways:

1. As an application at an end-user's desktop.

2. Integrated with applications, typically gaming applications.

3. As an application in the FW's DMZ in a corporate setting. The application and FW could be located in any of the following ways:

   a. As a corporate FW DMZ application.

   b. As a residential FW DMZ application.

   c. As an operator/ISP FW DMZ applications.

4. Integrated with a FW. This could be any type of FW including a personal FW

The key concept is in the first way. In this way no external personnel has to configure or deal with any configuration of any FW, network etc. Another interesting scenario is the second one. In this second case, still no configuration of any FW, network etc. has to be done.

The RealTunnel client will be designed in a modular way such that new applications and or protocols rapidly can be supported.

The present invention will advantageously work in two different scenarios: The main approach is to let a third party like MSN net or an external SIP registrar host the actual users and instant messaging services and the disclosed arrangement reside in the middle. I.e. the arrangement according to the present invention only does what is required in order to handle the media and NAT parts and not the "signalling" and the main instant messaging functionality parts. The first release supports XP Messenger used in combination with Passport. An alternative approach for consideration is that everything is hosted by the IP right owner according to the present invention, the instant messaging services, potentially a SIP client etc. Such an approach would however require much more development time.

UDP is nearly almost used for two-way real-time connections. HTTP is running over TCP. TCP's drawback is that it doesn't maintain the good real-time characteristics of UDP. We have identified a mechanism for simulating UDP behaviour on TCP.

The users may pay for different bandwidth classes. The RealTunnel according to the present invention can perform policing and control the actual bandwidth used by the users by counting IP packets. A willingness to pay mechanism might be provided giving those with high willingness to pay better QoS than other. This product may also support billing, pre and post paid.

A provisioning system is included for operations like: Adding user accounts, modifying user accounts, deleting these, adding balance on user account, check current registrations, see current calls etc. etc.

The goal of the present invention is to let HTTP traffic pass through firewalls and then control all HTTP RealTunnel clients and servers, the present invention does not have to be fully HTTP compliant. This means that all that has to be done to be HTTP compliant in order to bypass firewalls. The HTTP server has many possibilities for being optimized.

High level description

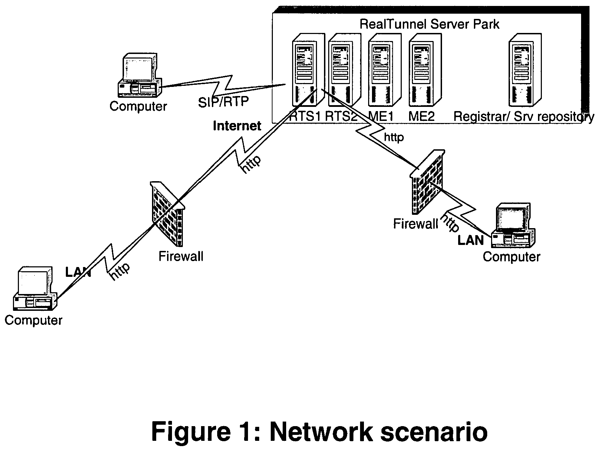

Figure 1 provides a high level schematically overview of the system. RTS indicates is the signalling servers and TS the media servers. The computer at the higher left corner is located directly on the Internet and typically might be using Messenger and be connected directly to a SIP registrar or an equivalent passport server. The other clients are located behind NAT devices and have to use RealTunnel SW. These are connected to RTS servers.

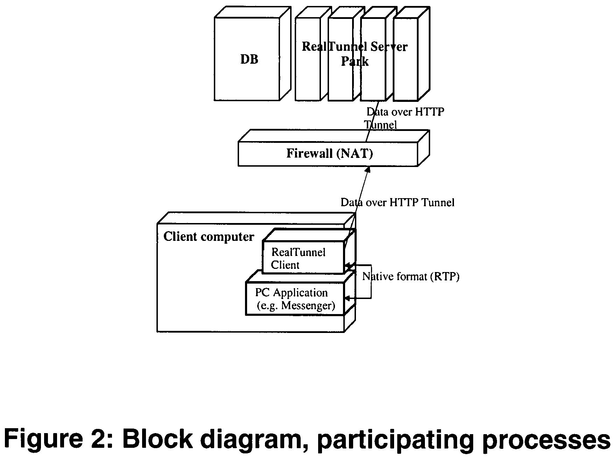

Figure 1 can be expanded into two different high level parts as shown in figure 2.

Figure 2 shows the key processes, with the present invention shown as Real Tunnel Client, DB and Real Tunnel Server Park.

The PC application is configured to send data to the RealTunnel client, and not the unavailable receiver on Internet. If the RealTunnel client is behind an HTTP proxy, the RealTunnel client is automatically configured with the HTTP proxy address and port. These data are automatically extracted from Internet Explorer settings if IE is installed on the client computer, if not, the user must manually enter the data.

The RealTunnel clients will register at start-up towards the RealTunnel server according to the present invention.

Media and signalling paths

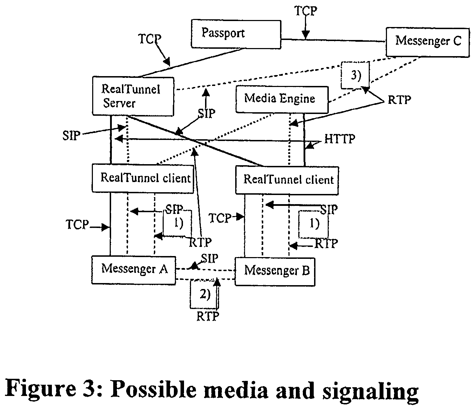

Figure 3 describes the situation, with TCP as full lines, UDP, SIP and RTP as dotted, and HTTP carried as fat lines. Arrows are indicating the use of protocols.

Several call scenarios exist:

1. Messenger A and Messenger B are located behind different firewalls. When they place a call, the signalling will go back and forth to the RealTunnel server and the media flow back and forth to the TS, see figure 1.

2. Messenger A and Messenger B are located behind the same firewall on the same LAN. When they place a call, the signalling flow will go back and forth to the RealTunnel server. The media flow however will go directly between the two Messenger applications, the *alternative* approach in the figure, see 2).

3. When one of the subscribers such as Messenger A or B wants to place a call to a pure Passport or SIP registrar subscriber the signalling and media flow will be as depicted in the figure 3).

In order to replace Messenger's SIP and RTP streams, one must have a SOCKS server to receive the TCP signalling, listen for messages with SIP IP RTP/UDP addresses in it, and replace them.

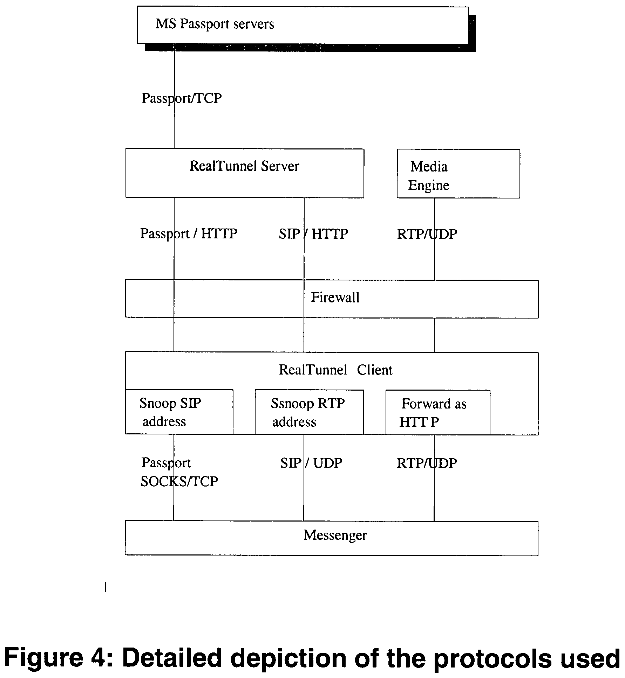

Figure 4 describes the RealTunnel client in more detail. While forwarding the Passport or SIP registrar messages, it must look for messages sending over SIP addresses, and replace it with the local RealTunnel client SIP address.

The SIP proxy must do the same, gain up the SDP in INVITEs, replacing the media (RTP) addresses with the local RTP-proxies.

Figure 4 shows a detailed depiction of the protocols that is used.

Protocol architecture

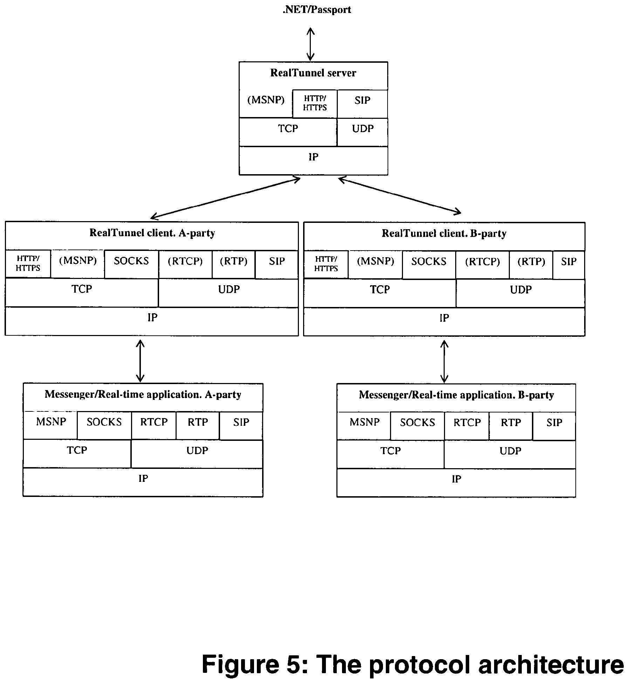

See figure 5 for a description of the protocol architecture. The RealTunnel client and server only need minor MSNP, RTP and RTCP knowledge because this information basically transparently is passed on. Figure 5 outlines the protocol architecture in particular when Messenger is the supported application, but other applications will also be supported in the same way. Messenger normally performs the proprietary MSNP signalling on TCP towards Passport and SIP signalling on UDP directly between the Messenger endpoints. Messenger may be configured to work towards an HTTP proxy or a SOCKS server for MSNP firewall traversal. The present invention takes advantage of the SOCKS Messenger functionality.

RTP over TCP

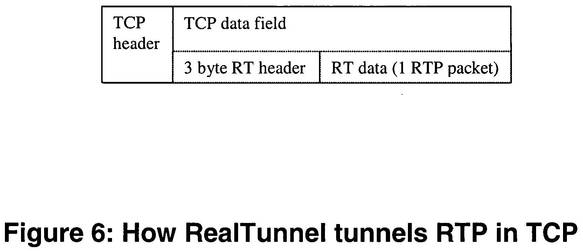

When tunnelling RTP in TCP, the RealTunnel adds a three byte header field (address) in the beginning of the TCP data field as shown in figure 6.

The three byte RT header states the length of the RTP packet (two bytes) and whether the payload is RTP or RTCP (one byte). On good networks as well as when Nagle's algorithm is disabled, one TCP packet usually contains one RT header and one RTP packet as indicated in figure 6. One TCP packet can however contain several RT and corresponding RTP packets. One TCP packet can also contain fragments of RTP packets; it is the TCP stack that decides how to fragment the RTP packets.

HTTP support

HTTP 1.0 support

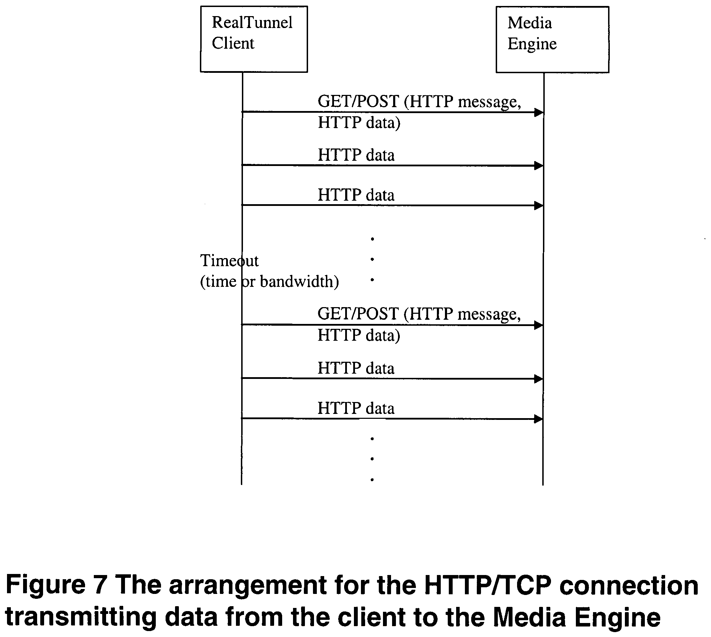

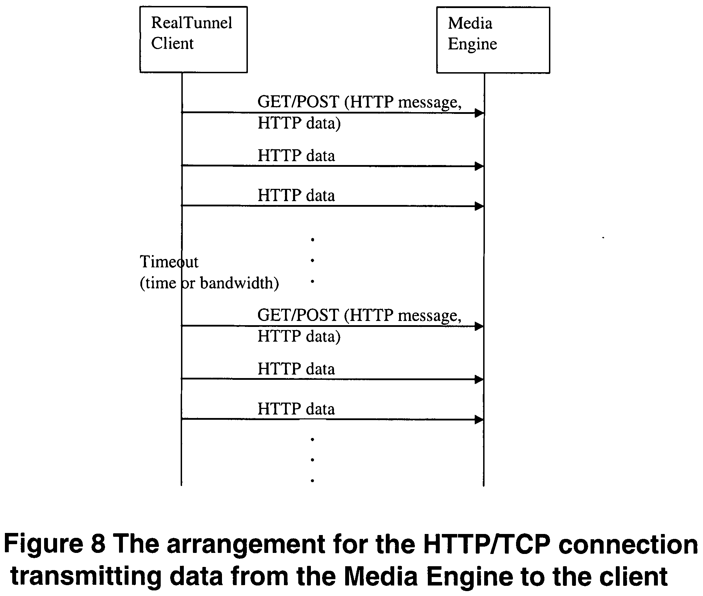

HTTP proxies such as squid only allow one outstanding request, i.e. one GET or POST from the client towards the server. The RESPONSE must be processed before a new GET or POST might be retransmitted. This is the reason why it is important to setup two unidirectional HTTP/TCP connections when handling real-time data, i.e. one connection for transmitting data and one connection for receiving data. It is important to keep the GET or POST outstanding as long time as possible to save bandwidth and processing power. I.e. to spawn a minimum of two TCP channels from each RealTunnel client towards a Media Engine. One is dedicated for data transmitted from the client towards the server, see figure 7 and one from the server to the client, see figure 8. When sending new GET/POSTs from the RealTunnel client to the Media Engine the TCP connection is reused when and as long as possible. It is initiated and established a new pair of HTTP/TCP connections BEFORE one gets timeout on the previous connection pair. Accordingly transmission and receiving on the new connection is started before closing down the old connections, hence a smooth migration from the old connections to the new connections is maintained.

HTTP data as shown in figure 8 is pure TCP/IP data, i.e. no HTTP header or specific HTTP information is included.

HTTPS support

HTTPS currently is enabled. The advantage by HTTPS is that on many networks it is possible to use TCP directly after the normal setup procedure.

The setup procedure on networks where HTTPS proxies are required is that the HTTP client, the RealTunnel client, sends an HTTP connect message towards the HTTP proxy. The HTTP proxy then sends a response back. In some cases plain TCP can then be used directly between the RealTunnel client, the HTTP proxy, the RealTunnel server and the Media Engine. In other cases SSL have to be used. SSL adds however less overhead than HTTP, at least when encryption can be turned off on the SSL layer.

Authentication of sessions

Before each new connection is setup from any TCP/HTTP client towards a RealTunnel server or an TS, an authentication procedure before accepting the connection on the application level is performed. According to the present invention one advantageously has to wait for the first portion of data that includes a user id and a hashed password before accepting the connection on the RealTunnel server and TS side. When the connection is setup, one may still check the user id and password on each datagram.

## QoS mechanisms

Improving TCP real-time characteristics by caching and dropping packets

The RealTunnel have implemented several mechanisms to make TCP get UDP behaviour. One of the features is based on caching and dropping techniques. The RealTunnel system has two levels of cache and possibilities for dropping packets.

**Cache level 1:** Cache level 1 is the TCP sender buffer. Currently the RealTunnel components don't have direct access to this buffer, but this can be implemented. Currently RealTunnel only is able to detect when the TCP sender buffer is full, not to what degree it is partly full. The TCP socket write function always returns the number of bytes successfully written down to the socket. Since the application also always knows how many bytes it tried to transmit, it knows when cache level 1 is full. The optimal cache size can be dependent on such as throughput, network condition etc. The TS has currently configured this value fixed to be 8 Kbytes. The RealTunnel client has set this value fixed to 4 Kbytes. The TS drops packets when cache level 1 is reached.

**Cache level 2:** It is possible to add a cache level only contained within the application. Currently the RealTunnel client has implemented this cache level. This cache level makes it easier to manage RTP packets. Since RTP packets are dropped when cache level 1 is reached, cache level 2 is used for being able to delete whole RTP packets within the cache level 2 buffer. The RealTunnel client has full control of the fill level of cache 2.

**Drop packets:** Packets are dropped as described above when cache level 1 and 2 is exceeded.
Signalling information is cached with 64 Kbytes buffers since it is important that this information is forwarded.

## Mechanisms for increasing bandwidth in congested networks

A problem when using TCP as a bearer of real-time data is that one TCP connection not always provides the necessary throughput. This is in particular a problem when transmitting voice codec data. A solution to this problem is to spawn several TCP connections when one TCP connection not is sufficient. It is here assumed that the new TCP connections are initiated and spawned by the RealTunnel client.
Different ways of identifying when to spawn new TCP connections:

1. Base it on cache parameters.

2. Base it on dropped packets.

3. Measure bandwidth, i.e. base it on transmitted bytes vs. received bytes.

4. Base it on RTCP messages.

5. Base it on the TCP window size.

6. Base it on roundtrip time.

7. Any combination of the above.

**Base it on the TCP window size:** This feature or possibility is currently not implemented. It is possible to get direct access to the TCP window size when operating on the OS (Operating System) level. For RealTunnel clients on client computers that would typically imply making a driver. The TCP window size is the minimum of the sender's congestion window size and the receiver's window size. The TCP window size can be used to decide when to spawn new TCP connections. Typically new channels can be spawn when the TCP window size decreases in size since this might indicate packet loss and a degraded network link.
**Base it on RTCP messages:** RTCP reports many parameters that can be used to decide when to spawn new TCP connections. Such parameters are roundtrip time, total number of packets sent vs. received, total number of bytes sent vs. received, packets lost during the last time interval, total number of packets lost etc. New channels can be spawn when e.g. the roundtrip time increase and or when number of lost packets increase.

**Base it on roundtrip time:** When the roundtrip time between the RealTunnel client and server increase, new TCP connections can be spawn. Increased roundtrip time indicates degradation of the network link.

RTCP messages might be a good choice since the RTCP reports are comprehensive and accurate. Cache and drop level is a good alternative. The cache level can then be used for low threshold levels and the drop level for higher threshold levels.

The following protocol is implemented for the purpose of spawning new TCP connections:
The *multi* protocol between the RealTunnel client and RealTunnel server is defined with the following messages:

1. RealTunnel Server->RealTunnel client: *SetMaxNoOfConnections* [STATIC]

2. RealTunnel server->RealTunnel client: *Epsilon* [STATIC]

A similar protocol exists between the RealTunnel server and the Media Engine.

The RealTunnel server reads a configuration file with the parameters ranging from 1 to 2 in the list above. These parameters will be read by the RealTunnel server at start-up and directly passed on to the RealTunnel client and the TS, used by both the TS and the RealTunnel client. *SetMax-NoOfConnections* states how many TCP data connections that maximum are allowed to be used. This parameter is also used both in the RealTunnel client and the Media Engine. *Epsilon* states how sensitive the client shall be for spawning new TCP connections.

An overall picture of the transmitting and receiving arrangement for three channels (TCP connections) is

Application 1 and Application 2 is a RealTunnel client or a Media Engine. Note that number of channels on the originating (Application 1) is independent of the number on the terminating side (Application 2).

It is also possible to reduce the number of TCP connection if the network condition improves.

Different ways of identifying when to reduce new TCP connections:

1. Base it on cache parameters.

2. Base it on dropped packets.

3. Measure bandwidth, i.e. base it on transmitted bytes vs. received bytes.

4. Base it on RTCP messages.

5. Base it on the TCP window size.

6. Base it on roundtrip time.

7. Any combination of the above.

**Base it on the TCP window size:** The TCP window size can be used to decide when to reduce the number of TCP connections. Typically channel(s) can be removed when the TCP window size increase in size since this might indicate a better TCP connection.

**Base it on RTCP messages:** Channels can be removed when e.g. the roundtrip time decrease and or when number of lost packets decrease.

**Base it on roundtrip time:** When the roundtrip time between the RealTunnel client and server decrease, TCP connections can be removed. Decreased roundtrip time indicates an improved network link.

RTCP messages might be a good choice since the RTCP reports are comprehensive and accurate. Cache and drop level is a good alternative. The cache level can then be used for low threshold levels and the drop level for higher threshold levels.

An additional *ReduceEpsilon* message in the the *multi* protocol between the RealTunnel client and RealTunnel server should be added. This number indicates threshold level for how easily the existing TCP connections should be removed when the network condition improves.

When HTTPS is used instead of HTTP is might be convenient to setup dedicated transmitter and receiver channels.

Cache

It is possible to spawn new TCP connections based on any of the following criteria:

1. Cache level 1 is full.

2. Cache level 2 is full.

3. Cache level 1 has met a certain threshold level.

4. Cache level 2 has met a certain threshold level.

It is possible to use the same scheme for reducing the number of TCP connections if the network condition improves.

Drop

It is possible to spawn new TCP connections based on the following criteria:

1. The current drop rate. I.e. the drop rate e.g. the last second.

2. A function of the current drop rate and the previous drop rate(s) weighting the most recent ones highest.

It is possible to use the same scheme for reducing the number of TCP connections if the network condition improves.

Measure bandwidth

It is possible to spawn new TCP connections when the transmitting rate is higher than the receiving rate. This section describes a protocol to use for this purpose.
The *multi* protocol between the RealTunnel client and RealTunnel server is defined with the following messages: The multi protocol between the RealTunnel client and the RealTunnel server is defined with the following additional messages:

1. RealTunnel server-> RealTunnel client: *SetPollInterval* [STATIC]

2. Media Engine -> RealTunnel client: *PassOnBw* [DYNAMIC] A similar protocol exists between the RealTunnel server and the Media Engine.

The RealTunnel server reads a configuration file with parameter 1. This parameter is read by the RealTunnel server at start-up and directly passed on to the RealTunnel client and the TS. Parameter 5 (*PassOnBw*) is dynamic and passed on each time the TS has calculated received and transmitted bandwidth for a certain period, explained further below. *SetPollInterval* indicates how often the RealTunnel client and TS shall calculate transmitted bandwidth.
At certain intervals (the poll interval) the sender and receiver calculate both transmitted bandwidth and received bandwidth. At each poll interval the Media Engine sends the calculated received and transmitted bandwidth over to the RealTunnel client. The RealTunnel client accordingly has calculated transmitted and received bandwidth for the same period. The RealTunnel client side calculates the new number of channels based on the following algorithm:

```
if (totalTransmittingBw/totalReceivingBw > epsilon) spawn
one new TCP connection
```

Where delta e.g. might be 1,04. This means that the senders transmit approximately 4% more than the receivers get. This multi control protocol is designed stateless in order to save complexity and processing power.
It is possible to use the same scheme for reducing the number of TCP connections if the network condition improves.

Server initiated spawning of new TCP connections

In some cases it might be helpful also to let the server side (TS), initiate new TCP connections. But since TCP connections always are initiated on the client side, this means that the RealTunnel client must get a message from the TS, telling the RealTunnel client to spawn a new TCP connection.

This mechanism is advantageous when the bandwidth from the RealTunnel client to the TS is sufficient, but the bandwidth from the TS to the RealTunnel suffers.

The TS must send a message to the RealTunnel client stating, spawn one or several new TCP connections. The message may alternatively be sent from the TS to the RealTunnel server and then to the RealTunnel client.

Server initiated reducing number of TCP connections

According to the scheme above, the server may also reduce the number of TCP connections.

Scheme for maximizing throughput on steady state connections

Assuming no packet loss, the following scheme is optimal for optimizing TCP throughput:
Send subsequent number of RTP packets on the same TCP connection at MAXIMUM according to:

```
RoundTrip Delay/[ Number of TCP connections * ms between
each RTP packet ]
```

The sender must at certain intervals; it can be the poll interval previously mentioned, check the roundtrip delay and transmit according to this scheme.

Improving throughput by using the best TCP connections

When packet loss is detected it is important NOT to use congested TCP connections, typically that is TCP connections that have experienced packet loss. Therefore the sender always should rank the available TCP connections. The rank method can be any of the following:

1. Base it on cache parameters; see the section; Mechanisms for increasing bandwidth in congested networks; Cache.

2. Base it on dropped packets, see section; Mechanisms for increasing bandwidth in congested networks; Drop.

3. Base it on transmitted bytes vs. received bytes; see section; Mechanisms for increasing bandwidth in congested networks; Measure Bandwidth.

4. Base it on the RTCP messages, see section; Mechanisms for increasing bandwidth in congested networks.

5. Base it on the TCP window size, see section; Mechanisms for increasing bandwidth in congested networks.

6. Base it on roundtrip time, see section; Mechanisms for increasing bandwidth in congested networks.

7. Any combination of the above.

RTCP messages might be a good choice since the RTCP reports are comprehensive and accurate.

The sender will always go through the available TCP connections in a round robin manner. When the first non-congested connection is found, the sender transmits the desired data on that particular TCP connection.

If only congested TCP connections are found, the least congested TCP connection will be used.

If all the TCP connections are congested according to the criteria chosen, the following RTP packets will be dropped until at least one TCP connection can pass on one whole RTP packet.

Theoretical background

Suppose the capacity of a single bottleneck between a TCP client and TCP server is *C*, and the initial one TCP connection gets a throughput *x*. Then if (*n-1*) new connections are spawned, the *n* connections will each receive

$$xC/(nx+C-x).$$

(Note that if *n*=1, then of course the answer is *x*.)

A simple example to illustrate:

Suppose a router comprise only TCP traffic, let's say 100 TCP connections are running through this router. The RealTunnel client has one single TCP connection through this router with a steady state throughput of 8 kbit/s. If the RealTunnel client sets up one additional TCP connection through this router, the new combined throughput for these two connections will be:

$$2* [8*1000/*(2*8+1000-8)]= 15,87 \text{ kbit/s}.$$

Other considerations and optimizations

When the roundtrip delay increases, and Nagle's algorithm is enabled (it is enabled on almost all TCP stacks by default), larger and larger TCP packets are sent to preserve the network condition. When only using one TCP connection between a RealTunnel client and a Media Engine, how many RTP packets are packed into one TCP packet is superfluous. The reason is that TCP when using Nagle's algorithm doesn't send ANY packet before the previous packet is acknowledged (or a full TCP packet is ready to be sent). In case of a packet loss, this means that there will be a full stop in the communication between the RealTunnel client and the TS until the lost TCP packet (and corresponding RTP packets) is resent and acknowledged.

When using several TCP connections the situation is different. Then one also must keep in mind which capabilities the actual applications like Messenger have for coping with lost RTP packets. When it comes to Messenger it can handle up to 3 consecutive lost RTP packets. This implies that at maximum three RTP packets should be packed into one TCP packet in case one TCP packet is lost. To be sure that this is the case, Nagle's algorithm should be turned off. Nagle's algorithm may be turned off both in the RealTunnel clients and in the TS.

Improving TCP throughput and characteristics by modifying TCP stack

Server side TCP ACK improvement

Since the server's side is controlled, i.e. the Media Engine, there is a possibility to improve the TS TCP stack.

When TCP packets are lost, the TCP sender will retransmit the lost packet(s) and won't send new packets before the lost packet(s) are acknowledged from the TCP server side. This is no good behaviour for real-time sensitive traffic.

On the server side, i.e. the TS, an acknowledge will ALWAYS be given as though all packets are received. The TCP 32-bit acknowledge number of the TCP packet to be equal to the TCP bit sequence number of the last received TCP packet is modified when necessary.

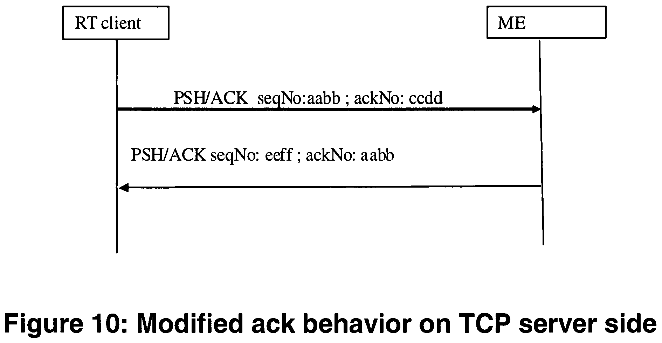

There is no guarantee that a lost TCP segment will contain only whole RTP packets. There is a risk that a segment may contain a fraction of an RTP packet. In case such a segment is lost the problem of getting back into sync with the RTP packets is faced. This is solved by adding a fixed bit pattern (preamble) to every RTP packet. When a TCP segment with a fractional RTP packet is lost, the receiver (TS) will not find the preamble as expected. RealTunnel now enters *hunt-mode.* In hunt-mode a search in the byte stream for the first occurrence of the preamble will be performed. When it is found, RealTunnel is back in sync with the RTP packets. There is a risk that the preamble pattern occurs in the RTP data. If this is the case RealTunnel could mistakenly use wrong data as an RTP packet. In this case, the next RTP packet will most likely lack the preamble, and RealTunnel enters *hunt-mode* again. Figure 10 shows modified ack behaviour on TCP server side.

This improvement is for traffic sent from the RT client towards the TS.

Server side RTP TCP retransmission improvement

When on the server side (TS) it is detected that a TCP packet (segment) is lost, the same segment is not retransmitted instead, and a new RTP packet is inserted into that segment before it is retransmitted. This means that one can drop packets that are lost while keeping the receiving TCP stack happy.

A packet loss is caused by congestion (CPU or bandwidth) somewhere along the path from the server to the client. A back off strategy involves dropping random RTP packets after such a packet loss to lower the probability of another packet loss occurring.

This improvement is for traffic sent from the TS towards the RT client.

Client side improvement

Potentially exactly the same improvements as described in the section Server side TCP ACK improvement and the section Server side RTP TCP retransmission improvement can be applied on the client side.

SSL

SSL/TLS is designed to operate on a reliable connection oriented transport-layer (TCP). SSL/TLS will fail when used on top of RealTunnel's enhanced TCP stack, see section Server side TCP ACK improvement. This is handled in one of two different ways:

1. Running the enhanced TCP stack on a port range that is used for non-SSL media only.

2. Modify the SSL record protocol so that it includes a fixed preamble. This preamble is used to find the start of a new SSL record in case a TCP segment is lost. When a TCP segment is lost RealTunnel enters *hunt-mode.* In the hunt-mode the received byte stream is searched for the preamble. When this is found it is known where the next SSL record starts. RealTunnel also allows the SSL records to have holes in the sequence numbering, but only increasing numbers are allowed (to avoid replay attacks).

## Messenger pseudo signalling flows

All the use cases in this section are abstract use cases, i.e. the real signalling flows are somehow more complicated.

Registration

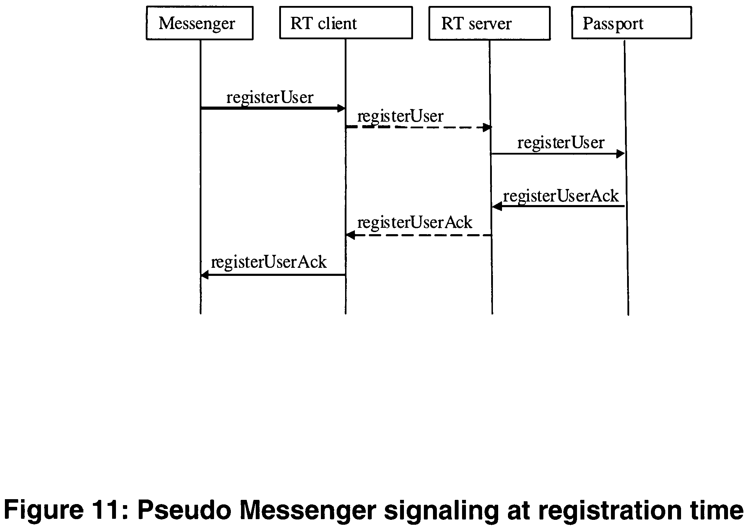

This use case shows the signalling at registration time, when a Messenger client registers to the system. This will lead to a local registration in the present database according to the present invention as well as registrations towards .net. and .net's database. Figure 11 shows the pseudo messenger signalling at the registration time.
To be able to support third party SIP servers, it is important that the RealTunnel client adds its own address to the Via and Record-Route header fields. This way, calls to the user will be routed through the RealTunnel server.

Call Setup

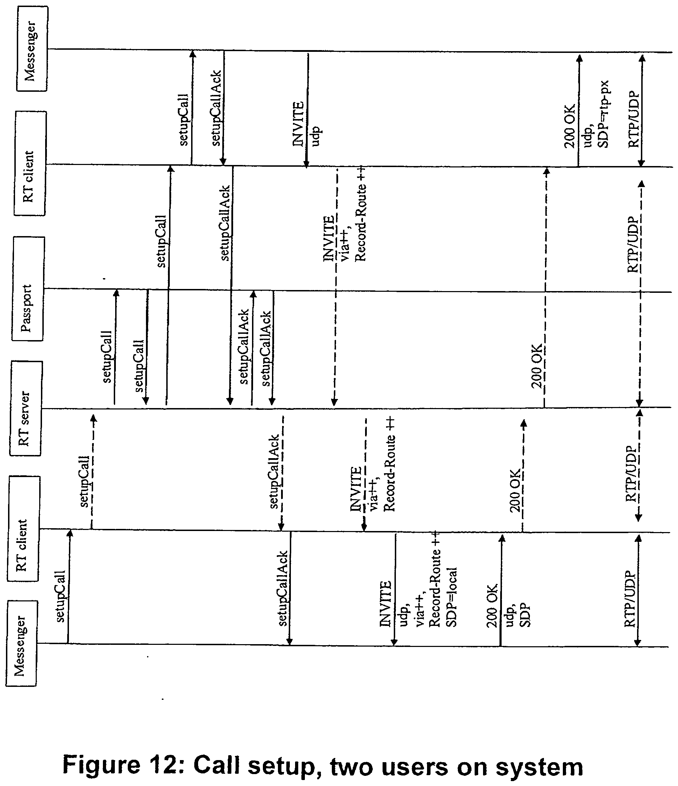

The two users may be registered on different RealTunnel servers, but in order to conserve resources (RealTunnel server connections); the call should not be routed through more than one RealTunnel server. This is solved by letting the system inform the calling and called RealTunnel client about which RTP-proxy to use. Figure 12 shows a call setup for a two users system.
The session starts as the user presses "call" or similar in Messenger, which triggers an INVITE sent to the local RealTunnel client, which starts a local RTP-proxy session. The listening local RTP/UDP port is reported back to the client in the forthcoming 200 OK.
The RealTunnel client asks to be connected to the called user, so that a virtual channel is opened to this one. The RealTunnel server locates the user. As the user is logged on the network, the INVITE is sent to the RealTunnel client of the called party in the HTTP session. This connects again to the calling user, opening another channel the opposite way. The calling party's RealTunnel client inserts the address of its local RTP-proxy in the SDP before forwarding the INVITE to Messenger.
If the call is accepted, Messenger replies with a 200 OK (or any other response with SDP, which is notified to the RTP-proxy), which is sent back to the RealTunnel server, and passed on to the calling RealTunnel client. This now replaces the given media addresses (SDP) with those of its listening RTP-proxy, and sends the modified 200 OK upstream.
Any further SIP message follows the same path.

## Abbreviation list

| NAT | Network Address Translation |
| DMZ | DeMilitarized Zone |
| HTTP | Hypertext Transport Protocol |

| LAN | Local Area Network |
| ME | Media Engine |
| RTS | RealTunnel Server |
| RTC | RealTunnel Client |
| QoS | Quality Of Service |
| PC | Personal Computer |
| FW | Firewall |
| RTP | Real Time Protocol |
| RTCP | Real Time Communication Protocol |
| IP | Internet Protocol |
| UDP | User Datagram Protocol |
| TCP | Transport Control Protocol |
| UPnP | Universal Plug aNd Play |
| SOCKS | SOCKETS. Authentication firewall traversal |
| DB | DataBase |
| ISP | Internet Service Provider |
| UPC | United Pan-Europe Communications |
| MSN | MicroSoft Network |
| MSNP | MicroSoft Network Protocol |
| SIP | Session Initiation Protocol |
| SDP | Session Description Protocol |
| SSL/TLS | Secure Sockets Layer / Transport Layer Security |
| UA | User Agent |
| IE | Internet Explorer |

**Claims**

1. A system for providing high reliability bidirectional data communication in real time through one or more firewalls and/or NAT devices,
said system comprising:

   a client computer behind one firewall and/or NAT device, said client computer comprising a tunnel client and at least one real time application running on said client, wherein said client computer is configured to communicate with a tunnel server on the outside of said firewall and/or NAT device,
   wherein said tunnel client is configured to establish at least one bidirectional connection to the tunnel server, wherein said at least one bidirectional connection comprises at least one bidirectional HTTPS connection or at least two unidirectional HTTP connections,
   the tunnel client being configured to support an HTTP/HTTPS proxy,
   **characterized in that** the tunnel client is configured to encapsulate RTP packets in TCP packets that are transmitted via the at least one bidirectional connection,
   and **in that** the tunnel client has a two level cache system, wherein the tunnel client is configured to discard data packets and to set up multiple TCP connections to the tunnel server based on the fill level of the cache system.

2. A system according to claim 1,
   wherein to set up a new connection to the tunnel server, the client computer is adapted to send a user id and a hashed password to the tunnel server.

3. A system according to any of the claims 1 or 2, wherein the tunnel client is a SIP proxy.

4. A method for high reliability bidirectional data communication in real time through one or more firewalls and/or NAT devices where said method comprises the use of at least a tunnel client behind the firewall configured to communicate with a tunnel server on the outside of said firewall,
   wherein the tunnel client establishes at least one bidirectional connection to the tunnel server, wherein said at least one bidirectional connection comprises at least one bidirectional HTTPS connection or at least two unidirectional HTTP connections,
   wherein the tunnel client establishes new HTTP/HTTPS connection(s) to the tunnel server before a time-out on the previous HTTP/HTTPS connection(s), the tunnel client and tunnel server encapsulating RTP packets in TCP packets that are transported via the at least one bidirectional connection, the tunnel client supporting the use of an HTTP/HTTPS proxy, wherein the tunnel client comprises a two level cache system and in that the tunnel client discards data packets and sets up multiple TCP connections to the tunnel server based on the fill level of the cache system.

5. A method according to claim 4, wherein the tunnel client is transmitting/receiving data in a call according to one of the following steps:

  a) directing UDP communication between endpoints, where the communication can be directly between messenger applications or directly between tunnel clients, or
  b) by support of automatic proxy scripts for retrieval of HTTP/HTTPS proxy IP address and port, or
  c) using UDP communication back and forth to the tunnel server, or
  d) using TCP communication back and forth to the tunnel server, or
  e) when HTTPS communication is specified, using HTTPS communication back and forth to the tunnel server.

6. A method according to claim 5, wherein the tunnel client establishes new TCP connections whenever one or more of the following conditions are met:

  cache level 1 is full and/or,
  cache level 2 is full and/or,
  cache level 1 has reached a predetermined threshold level and/or,
  cache level 2 has reached a predetermined threshold level and/or,
  a rate of dropping packets has reached a predetermined rate dropping level and/or,
  a function of a current drop rate and previous drop rate(s) are satisfied and/or,
  a ratio between a total transmitted bandwidth and a total receiving bandwidth exceeds a predetermined threshold with reference to the tunnel client.

7. A method according to claim 5, wherein the tunnel client reduces TCP connections whenever one or more of the following conditions are satisfied:

  cache level 1 is empty and/or,
  cache level 2 is empty and/or,
  cache level 1 has reached a predetermined threshold level and/or,
  cache level 2 has reached a predetermined threshold level and/or,
  a rate of dropping packets has reached a predetermined rate dropping level and/or,
  a function of a current drop rate and previous drop rate(s) are satisfied and/or,
  a ratio between a total transmitted bandwidth and a total receiving bandwidth exceeds a predetermined threshold with reference to the tunnel client.

8. A method according to claim 5, wherein the tunnel client optimizes TCP throughput based on a maximum number of subsequent RTP packets transmitted on the same TCP connection as given by:

  a ratio between a round trip delay and a number of HTTP/HTTPS connections times a time interval between every single RTP packet, wherein the time interval is checked/measured by a sender at predetermined intervals.

9. A method according to claim 5 or 8, further comprising ranking the best available TCP connection where said ranking is based on one or more of the following conditions:

  cache level 1 is full and/or,
  cache level 2 is full and/or,
  cache level 1 has reached a predetermined threshold level and/or,
  cache level 2 has reached a predetermined threshold level and/or,
  a rate of dropping packets has reached a predetermined rate dropping level and/or,
  a function of a current drop rate and previous drop rate(s) are satisfied and/or,
  a ratio between a total transmitted bandwidth and a total receiving bandwidth exceeds a predetermined threshold with reference to the tunnel client and/or,
  based on RTCP message(s) and/or,
  based on TCP window size.

10. A method according to any of the claims 4-9, wherein Nagle's algorithm can be disabled.

11. A method according to any of the claims 4-10, wherein the receiver always acknowledge all packets as received, and if TCP packets are lost the receiver will modify the TCP 32-bit acknowledge number of the TCP packet to be equal to the TCP bit sequence number of the last received TCP packet.

12. A method according to claim 11, further comprising modifying the TCP stack, where a sender is adding a fixed bit pattern to every RTP packet, wherein the fixed bit pattern enables resynchronization when a TCP segment with a fractional RTP packet is lost.

13. A method according to any of the claims 4-12 further comprising a sender detecting that a TCP packet is lost and inserting a new RTP packet into the TCP packet that has to be resent.

14. Use of the system or the method in accordance to any of the previous claims within video and/or voice conference equipment.


**Patentansprüche**

1. System zum Bereitstellen einer zweiseitig gerichteten Datenkommunikation hoher Zuverlässigkeit in Echtzeit durch eine oder mehrere Firewalls und/oder NAT-Vorrichtungen,
das System umfassend:

   einen Client-Computer hinter einer Firewall und/oder NAT-Vorrichtung, wobei der Client-Computer einen Tunnel-Client und zumindest eine Echtzeitanwendung umfasst, die auf dem Client läuft, wobei der Client-Computer konfiguriert ist, mit einem Tunnel-Server an der Außenseite der Firewall und/oder NAT-Vorrichtung zu kommunizieren,
   wobei der Tunnel-Client konfiguriert ist, zumindest eine zweiseitig gerichtete Verbindung zum Tunnel-Server zu errichten,
   wobei die zumindest eine zweiseitig gerichtete Verbindung zumindest eine zweiseitig gerichtete HTTPS-Verbindung oder zumindest zwei einseitig gerichtete HTTP-Verbindungen umfasst,
   wobei der Tunnel-Client konfiguriert ist, einen HTTP/HTTPS-Proxy zu unterstützen,
   **dadurch gekennzeichnet, dass** der Tunnel-Client konfiguriert ist, RTP-Pakete in TCP-Paketen einzukapseln, die über die zumindest eine zweiseitig gerichtete Verbindung gesendet werden,
   und dass der Tunnel-Client ein zweistufiges Cache-System aufweist, wobei der Tunnel-Client konfiguriert ist, Datenpakete zu verwerfen und mehrere TCP-Verbindungen zum Tunnel-Server auf Basis des Füllstands des Cache-Systems einzurichten.

2. System nach Anspruch 1,
wobei zum Einrichten einer neuen Verbindung zum Tunnel-Server der Client-Computer ausgebildet ist, eine Benutzer-ID und ein gehashtes Passwort zum Tunnel-Server zu senden.

3. System nach einem der Ansprüche 1 oder 2, wobei der Tunnel-Server ein SIP-Proxy ist.

4. Verfahren für eine zweiseitig gerichtete Datenkommunikation hoher Zuverlässigkeit in Echtzeit durch eine oder mehrere Firewalls und/oder NAT-Vorrichtungen, wobei das Verfahren die Verwendung zumindest eines Tunnel-Clients hinter der Firewall umfasst, konfiguriert zum Kommunizieren mit einem Tunnel-Server an der Außenseite der Firewall,
wobei der Tunnel-Client zumindest eine zweiseitig gerichtete Verbindung zum Tunnel-Server errichtet, wobei die zumindest eine zweiseitig gerichtete Verbindung zumindest eine zweiseitig gerichtete HTTPS-Verbindung oder zumindest zwei einseitig gerichtete HTTP-Verbindungen umfasst,
wobei der Tunnel-Client (eine) neue HTTP/HTTPS-Verbindung(en) zum Tunnel-Server vor einer Unterbrechung auf der (den) früheren HTTP/HTTPS-Verbindung(en) errichtet, wobei der Tunnel-Client und Tunnel-Server RTP-Pakete in TCP-Paketen einkapseln, die über die zumindest eine zweiseitig gerichtete Verbindung transportiert werden, wobei der Tunnel-Client die Verwendung eines HTTP/HTTPS-Proxy unterstützt, wobei der Tunnel-Client ein zweistufiges Cache-System aufweist, und dass der Tunnel-Client Datenpakete verwirft und mehrere TCP-Verbindungen zum Tunnel-Server auf Basis des Füllstands des Cache-Systems einrichtet.

**5.** Verfahren nach Anspruch 4
wobei der Tunnel-Client Daten in einem Anruf nach einem der folgenden Schritte sendet/empfängt:

a) Lenken einer UDP-Kommunikation zwischen Endpunkten, wobei die Kommunikation direkt zwischen Melderanwendungen oder direkt zwischen Tunnel-Clients erfolgen kann, oder
b) durch Unterstützen automatischer Proxy-Skripten zum Gewinnen von HTTP/HTTPS-Proxy-IP-Adresse und -Anschluss oder
c) unter Verwendung einer UDP-Kommunikation zum und vom Tunnel-Server oder
d) unter Verwendung einer TCP-Kommunikation zum und vom Tunnel-Server oder
e) wenn eine HTTPS-Kommunikation spezifiziert ist, unter Verwendung einer HTTPS-Kommunikation zum und vom Tunnel-Server.

**6.** Verfahren nach Anspruch 5,
wobei der Tunnel-Client neue TCP-Verbindungen errichtet, sobald eine oder mehrere der folgenden Bedingungen erfüllt sind:

Cache-Stufe 1 ist voll und/oder
Cache-Stufe 2 ist voll und/oder
Cache-Stufe 1 hat eine vorbestimmte Schwellenstufe erreicht und/oder
Cache-Stufe 2 hat eine vorbestimmte Schwellenstufe erreicht und/oder
eine Rate zum Verwerfen von Paketen hat eine vorbestimmte Verwerfungsratenstufe erreicht und/oder
eine Funktion einer aktuellen Verwerfungsrate und einer vorherigen Verwerfungsrate oder mehrerer vorheriger Verwerfungsraten ist erfüllt und/oder
ein Verhältnis zwischen einer gesamten gesendeten Bandbreite und einer gesamten empfangenen Bandbreite überschreitet einen vorbestimmten Schwellenwert in Bezug auf den Tunnel-Client.

**7.** Verfahren nach Anspruch 5,
wobei der Tunnel-Client TCP-Verbindungen verringert, sobald eine oder mehrere der folgenden Bedingungen erfüllt sind:

Cache-Stufe 1 ist leer und/oder
Cache-Stufe 2 ist leer und/oder
Cache-Stufe 1 hat eine vorbestimmte Schwellenstufe erreicht und/oder
Cache-Stufe 2 hat eine vorbestimmte Schwellenstufe erreicht und/oder
eine Rate zum Verwerfen von Paketen hat eine vorbestimmte Verwerfungsratenstufe erreicht und/oder
eine Funktion einer aktuellen Verwerfungsrate und einer vorherigen Verwerfungsrate oder mehrerer vorheriger Verwerfungsraten ist erfüllt und/oder
ein Verhältnis zwischen einer gesamten gesendeten Bandbreite und einer gesamten empfangenen Bandbreite überschreitet einen vorbestimmten Schwellenwert in Bezug auf den Tunnel-Client.

**8.** Verfahren nach Anspruch 5,
wobei der Tunnel-Client einen TCP-Durchsatz auf Basis einer maximalen Anzahl nachfolgender RTP-Pakete optimiert, die auf derselben TCP-Verbindung gesendet werden, gegeben durch:

ein Verhältnis zwischen einer Rundlaufverzögerung und einer Anzahl von HTTP/HTTPS-Verbindungen mal einem Zeitintervall zwischen jedem einzelnen RTP-Paket, wobei das Zeitintervall durch einen Sender in vorbestimmten Intervallen geprüft/gemessen wird.

**9.** Verfahren nach Anspruch 5 oder 8
weiter umfassend ein Reihen der am besten verfügbaren TCP-Verbindung, wobei das Reihen auf einer oder mehreren der folgenden Bedingungen basiert:

Cache-Stufe 1 ist voll und/oder
Cache-Stufe 2 ist voll und/oder
Cache-Stufe 1 hat eine vorbestimmte Schwellenstufe erreicht und/oder
Cache-Stufe 2 hat eine vorbestimmte Schwellenstufe erreicht und/oder
eine Rate zum Verwerfen von Paketen hat eine vorbestimmte Verwerfungsratenstufe erreicht und/oder
eine Funktion einer aktuellen Verwerfungsrate und einer vorherigen Verwerfungsrate oder mehrerer vorheriger Verwerfungsraten ist erfüllt und/oder

ein Verhältnis zwischen einer gesamten gesendeten Bandbreite und einer gesamten empfangenen Bandbreite überschreitet einen vorbestimmten Schwellenwert in Bezug auf den Tunnel-Client und/oder

basierend auf RTCP-Nachricht(en) und/oder

basierend auf TCP-Fenstergröße.

10. Verfahren nach einem der Ansprüche 4-9,
wobei Nagle-Algorithmus gesperrt werden kann.

11. Verfahren nach einem der Ansprüche 4-10,
wobei der Empfänger immer alle Pakete als empfangen bestätigt und falls TCP-Pakete verloren gehen, der Empfänger die TCP-32-Bit-Bestätigungsnummer des TCP-Pakets so verändert, dass sie gleich der TCP-Bit-Sequenznummer des letzten empfangenen TCP-Pakets ist.

12. Verfahren nach Anspruch 11, weiter umfassend ein Verändern des TCP-Stapels, wo ein Sender ein unveränderliches Bit-Muster jedem RTP-Paket hinzufügt, wobei das unveränderliche Bit-Muster eine Resynchronisierung ermöglicht, wenn ein TCP-Segment mit einem Teil-RTP-Paket verloren geht.

13. Verfahren nach einem der Ansprüche 4-12, weiter umfassend einen Sender, der feststellt, dass ein TCP-Paket verloren gegangen ist und ein neues RTP-Paket in das TCP-Paket einfügt, das erneut gesendet werden muss.

14. Verwendung des Systems oder Verfahrens nach einem der vorstehenden Ansprüche in einem Video- und/oder Sprachkonferenzgerät.

## Revendications

1. Système pour réaliser une communication de données bidirectionnelle à fiabilité élevée en temps réel à travers un ou plusieurs pare-feux et/ou dispositifs NAT,
ledit système comprenant :

un ordinateur client derrière un seul pare-feu et/ou dispositif NAT, ledit ordinateur client comprenant un client de tunnel et au moins une application en temps réel s'exécutant sur ledit client, dans lequel ledit ordinateur client est configuré pour communiquer avec un serveur de tunnel sur l'extérieur dudit pare-feu et/ou dispositif NAT,
dans lequel ledit client de tunnel est configuré pour paramétrer au moins une connexion bidirectionnelle au serveur de tunnel,
dans lequel ladite au moins une connexion bidirectionnelle comprend au moins une connexion HTTPS bidirectionnelle ou au moins deux connexions HTTP unidirectionnelles,
le client de tunnel étant configuré pour supporter un mandataire HTTP/HTTPS,
**caractérisé en ce que** le client de tunnel est configuré pour encapsuler des paquets RTP dans des paquets TCP qui sont transmis via l'au moins une connexion bidirectionnelle,
et **en ce que** le client de tunnel a un système de cache à deux niveaux, dans lequel le client de tunnel est configuré pour rejeter des paquets de données et pour paramétrer des connexions TCP multiples au serveur de tunnel sur la base du niveau de remplissage du système de cache.

2. Système selon la revendication 1,
dans lequel, pour paramétrer une nouvelle connexion au serveur de tunnel, l'ordinateur client est conçu pour envoyer un id d'utilisateur et un mot de passe haché au serveur de tunnel.

3. Système selon l'une quelconque des revendications 1 ou 2, dans lequel le client de tunnel est un mandataire SIP.

4. Procédé pour la communication de données bidirectionnelle à fiabilité élevée en temps réel à travers un ou plusieurs pare-feux et/ou dispositifs NAT où ledit procédé comprend l'utilisation d'au moins un client de tunnel derrière le pare-feu configuré pour communiquer avec un serveur de tunnel sur l'extérieur dudit pare-feu,
dans lequel le client de tunnel établit au moins une connexion bidirectionnelle au serveur de tunnel, dans lequel ladite au moins une connexion bidirectionnelle comprend au moins une connexion HTTPS bidirectionnelle ou au moins deux connexions HTTP unidirectionnelles,

dans lequel le client de tunnel établit une ou des nouvelle(s) connexion(s) HTTP/HTTPS au serveur de tunnel avant une expiration de temps sur la/les connexion(s) HTTP/HTTPS précédente(s), le client de tunnel et le serveur de tunnel encapsulant des paquets RTP dans des paquets TCP qui sont transportés via l'au moins une connexion bidirectionnelle, le client de tunnel supportant l'utilisation d'un mandataire HTTP/HTTPS, dans lequel le client de tunnel comprend un système de cache à deux niveaux et en ce que le client de tunnel rejette des paquets de données et paramètre des connexions TCP multiples au serveur de tunnel sur la base du niveau de remplissage du système de cache.

**5.** Procédé selon la revendication 4,
dans lequel le client de tunnel émet/reçoit des données dans un appel selon l'une des étapes suivantes :

a) direction de communication UDP entre des points finaux, où la communication peut être directement entre des applications de messagerie ou directement entre des clients de tunnel, ou
b) par support de scénarios de mandataire automatiques pour la récupération d'adresse et de port IP de mandataire HTTP/HTTPS, ou
c) utilisation de communication UDP dans les deux sens jusqu'au serveur de tunnel, ou
d) utilisation de communication TCP dans les deux sens jusqu'au serveur de tunnel, ou
e) quand une communication HTTPS est spécifiée, utilisation de communication HTTPS dans les deux sens jusqu'au serveur de tunnel.

**6.** Procédé selon la revendication 5,
dans lequel le client de tunnel établit de nouvelles connexions TCP chaque fois qu'une ou plusieurs des conditions suivantes sont satisfaites :

le niveau 1 du cache est plein, et/ou
le niveau 2 du cache est plein, et/ou
le niveau 1 du cache a atteint un niveau de seuil prédéterminé, et/ou
le niveau 2 du cache a atteint un niveau de seuil prédéterminé, et/ou
un taux de largage de paquets a atteint un niveau de largage nominal prédéterminé, et/ou
une fonction d'un taux de largage courant et de taux de largage précédents est satisfaite, et/ou
un rapport entre une largeur de bande totale d'émission et une largeur de bande totale de réception dépasse un seuil prédéterminé en se référant au client de tunnel.

**7.** Procédé selon la revendication 5,
dans lequel le client de tunnel réduit des connexions TCP chaque fois qu'une ou plusieurs des conditions suivantes sont satisfaites :

le niveau 1 du cache est vide, et/ou
le niveau 2 du cache est vide, et/ou
le niveau 1 du cache a atteint un niveau de seuil prédéterminé, et/ou
le niveau 2 du cache a atteint un niveau de seuil prédéterminé, et/ou,
un taux de largage de paquets a atteint un niveau de largage nominal prédéterminé, et/ou,
une fonction d'un taux de largage courant et de taux de largage précédents est satisfaite, et/ou
un rapport entre une largeur de bande totale d'émission et une largeur de bande totale de réception dépasse un seuil prédéterminé en se référant au client de tunnel.

**8.** Procédé selon la revendication 5,
dans lequel le client de tunnel optimise la sortie TCP sur la base d'un nombre maximal de paquets RTP suivants émis sur la même connexion TCP que donné par :

un rapport entre un retard d'aller et retour et un certain nombre de connexions HTTP/HTTPS fois un intervalle de temps entre chaque paquet RTP simple, dans lequel l'intervalle de temps est vérifié/mesuré par un expéditeur à des intervalles prédéterminés.

**9.** Procédé selon la revendication 5 ou 8,
comprenant en outre le classement de la meilleure connexion TCP disponible où ledit classement est basé sur une ou plusieurs des conditions suivantes :

le niveau 1 du cache est plein, et/ou,

le niveau 2 du cache est plein, et/ou

le niveau 1 du cache a atteint un niveau de seuil prédéterminé, et/ou

le niveau 2 du cache a atteint un niveau de seuil prédéterminé, et/ou

un taux de largage de paquets a atteint un niveau de largage nominal prédéterminé, et/ou,

une fonction d'un taux de largage courant et de taux de largage précédents est satisfaite, et/ou

un rapport entre une largeur de bande totale d'émission et une largeur de bande totale de réception dépasse un seuil prédéterminé en se référant au client de tunnel, et/ou,

sur la base de message(s) RTCP, et/ou

sur la base de la taille de fenêtre TCP.

10. Procédé selon l'une quelconque des revendications 4 à 9, dans lequel l'algorithme de Nagle peut être désactivé.

11. Procédé selon l'une quelconque des revendications 4 à 10, dans lequel le récepteur reconnaît toujours tous les paquets lorsqu'ils sont reçus, et si des paquets TCP sont perdus le récepteur va modifier le numéro d'accusé de réception TCP 32 bits du paquet TCP pour qu'il soit égal au numéro de la séquence de bits TCP du dernier paquet TCP reçu.

12. Procédé selon la revendication 11, comprenant en outre la modification de la pile TCP, où un expéditeur ajoute une combinaison de bits fixée à chaque paquet RTP, dans lequel la combinaison de bits fixée permet une resynchronisation quand un segment TCP avec un paquet RTP fractionnaire est perdu.

13. Procédé selon l'une quelconque des revendications 4 à 12 comprenant en outre un expéditeur détectant qu'un paquet TCP est perdu et l'insertion d'un nouveau paquet RTP dans le paquet TCP qui doit être renvoyé.

14. Utilisation du système ou du procédé selon l'une quelconque des revendications précédentes à l'intérieur d'un équipement de vidéoconférence et/ou d'audioconférence.

**Figure 1: Network scenario**

EP 1 513 315 B1

**Figure 2: Block diagram, participating processes**

**Figure 3: Possible media and signaling**

```
          ┌──────────────────────────────┐
          │  MS Passport servers         │
          └──────────────────────────────┘

          Passport/TCP


   ┌─────────────────────────┐   ┌──────────────┐
   │   RealTunnel Server     │   │   Media      │
   │                         │   │   Engine     │
   └─────────────────────────┘   └──────────────┘

   Passport / HTTP    SIP / HTTP     RTP/UDP


   ┌────────────────────────────────────────────┐
   │                Firewall                     │
   └────────────────────────────────────────────┘


   ┌────────────────────────────────────────────┐
   │           RealTunnel  Client                │
   │ ┌───────────┐ ┌───────────┐ ┌────────────┐ │
   │ │ Snoop SIP │ │ Ssnoop RTP│ │ Forward as │ │
   │ │ address   │ │ address   │ │ HTT P      │ │
   │ └───────────┘ └───────────┘ └────────────┘ │
   └────────────────────────────────────────────┘

   Passport         SIP / UDP      RTP/UDP
   SOCKS/TCP


   ┌────────────────────────────────────────────┐
   │               Messenger                     │
   └────────────────────────────────────────────┘
```

# Figure 4: Detailed depiction of the protocols used

**Figure 5: The protocol architecture**

| TCP header | TCP data field | |
|---|---|---|
| | 3 byte RT header | RT data (1 RTP packet) |

**Figure 6: How RealTunnel tunnels RTP in TCP**

EP 1 513 315 B1

**Figure 7 The arrangement for the HTTP/TCP connection transmitting data from the client to the Media Engine**

RealTunnel Client — Media Engine

GET/POST (HTTP message, HTTP data)

HTTP data

HTTP data

Timeout
(time or bandwidth)

GET/POST (HTTP message, HTTP data)

HTTP data

HTTP data

**Figure 8 The arrangement for the HTTP/TCP connection transmitting data from the Media Engine to the client**

EP 1 513 315 B1

Application 1                    Application 2

**Figure 9: A description of the multiplexing arrangement when three channels are spawn in each direction: One combined control and media channel and two pure media channels**

EP 1 513 315 B1

**Figure 10: Modified ack behavior on TCP server side**

**Figure 11: Pseudo Messenger signaling at registration time**

Figure 12: Call setup, two users on system

Individual voice and video stream

Common mixed voice and video stream

# Figure 13 A standard conferencing setup

EP 1 513 315 B1

**Figure 14 Copy of Figure 1**

Voice and video stream from client #1

Voice and video stream from other clients

**Figure 15 Simple voice and video conferencing setup**

EP 1 513 315 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6687245 B2, Fangman
- US 20030093563 A1, Young
- US 20020150083 A1, Fangman
- EP 10811918 A2
- WO 0211389 A2
- US 2003091000 A1